# Europäisches Patentamt

# European Patent Office

# Office européen des brevets

(11) Publication number: **0 555 768 B1**

## EUROPEAN PATENT SPECIFICATION

(45) Date of publication of patent specification: **05.07.95**  (51) Int. Cl.⁶: **A23L  1/16**

(21) Application number: **93101717.2**

(22) Date of filing: **08.02.93**

(54) **A fast-cooking pasta product and method for the preparation thereof.**

(30) Priority: **12.02.92 IT MI920288**

(43) Date of publication of application:
**18.08.93 Bulletin  93/33**

(45) Publication of the grant of the patent:
**05.07.95 Bulletin  95/27**

(84) Designated Contracting States:
**AT BE CH DE DK ES FR GB GR IE IT LI LU MC NL PT SE**

(56) References cited:
| | |
|---|---|
| EP-A- 0 139 813 | EP-A- 0 272 502 |
| EP-A- 0 275 838 | EP-A- 0 338 282 |
| EP-A- 0 352 876 | FR-A- 1 437 015 |
| GB-A- 1 587 977 | US-A- 4 044 165 |
| US-A- 4 529 609 | US-A- 4 876 104 |

(73) Proprietor: **BARILLA G. e R. F.lli - Società per Azioni**
**Viale Riccardo Barilla, 3/A**
**I-43100 Parma (IT)**

(72) Inventor: **Guarneri, Roberto**
**Via Sophia, 11**
**I-43100 Parma (IT)**
Inventor: **Mora, Carlo**
**Via Argini, 33**
**I-43030 Mamiano,**
**Parma (IT)**

(74) Representative: **Vannini, Torquato et al**
**c/o JACOBACCI & PERANI S.p.A.**
**Via Visconti di Modrone, 7**
**I-20122 Milano (IT)**

Rank Xerox (UK) Business Services
(3.10/3.09/3.3.3)

## EP 0 555 768 B1

## Description

This invention relates, in a general aspect thereof, to a pasta product commonly referred to as "fast-cooking" pasta, i.e. a pasta product the cooking or re-hydration whereof in boiling water takes much less time than is normally required to cook dried pasta of the same size and thickness.

In particular, but not exclusively, this invention relates to short length, smooth or scored pasta, prepared from semolina and water and having a cooking time which is halved from that of traditional dried pasta of the same size.

The invention also concerns a method of making fast-cooking pasta products as above.

It is known that dried (i.e. having a moisture content of about 11-12%) pasta as produced in the so-called "short length" sizes, has a web thickness within the range of 0.8 to 2.0 mm.

Also known is that the cooking time for that kind of pasta varies between 7-8 minutes and 13-14 minutes, depending on its web thickness.

A growing demand for quickly prepared food items has long since spurred among pasta producers technological level research directed to provide new formulations, processing methods, and not least, new sizes/shapes which can lead, perhaps in synergistic relationship, to the obtainment and commercial production of fast cooking pasta, while retaining all the features and organoleptic properties that are typically exhibited by conventional dried pasta after cooking.

The directions along which this research has been conducted heretofore are basically two:

(i) the provision of pre-cooked pasta, and

(ii) the provision of pasta having a smaller web thickness.

Pre-cooked pasta production techniques have been developed, and in some cases implemented, wherein fresh pasta is subjected, directly after making it, to a drying/cooking process by heating it to high temperatures on the order of 150-370°C (French Patent No. 1,437,015), but the end product not infrequently tasted burnt, and such techniques were soon abandoned.

Another prior technique provides swelled pre-cooked food products, but the additives employed to achieve "expansion" of the pasta as it is being extruded invariably impart to the end product a clearly different flavor from the traditionally accepted one.

A further technique, which is still fairly widely employed, provides for proper cooking of fresh pasta immediately after its preparation in water, followed by drying and packaging steps, with or without a thermal stabilization heat treatment. Such products, once re-hydrated in hot or boiling water, even for a very short time (3-5 minutes), usually loose the organoleptic properties that are to be expected of a good pasta product. In fact, they fail to develop "just underdone" features, do not present themselves springy on the dish, and tend to be sticky, or may even acquire an objectionable surface coating.

The expedient of reducing the web thickness almost invariably yields products with poor cooking properties, lacking firmness, and having decidedly inferior organoleptic properties.

The underlying problem of this invention is to provide fast cooking pasta with such features as to overcome the drawbacks of the prior art, that is a pasta product which, additionally to being re-hydratable in boiling water within a much reduced time from that normally recommended for cooking dried pasta of the same size and thickness, indisputably retains all the organoleptic and cooking properties of traditional dried pasta.

This problem is solved according to the invention by a pasta product being characterized in that it has:

a moisture content in the 24% to 28% range;

a web thickness in the 0.8 mm to 2.0 mm range;

a cooking time of 3 to 7 minutes in boiling water;

and wherein the starch granules appear to be embedded and flattened within a gluten matrix on whose surface they form a continuous gelled film.

The invention also concerns a method of making a pasta product as above specified on a commercial scale, which method is characterized in that it comprises the steps of:

providing a pasta product, as newly made from semolina and water and set into a predetermined size/shape, at a moisture content of 30-32%;

dehydrating said pasta product by heat treatment until a pasta product is obtained which has a moisture content of 24-28% and a temperature of 90-95°C, with an Aw in the 0.92 to 0.98 range;

chilling the pasta product thus obtained down to a temperature thereof in the 24° to 27°C range while keeping the average moisture and the Aw values unaltered;

sealing metered amounts of the pasta product thus obtained inside transparent packages to microwaves and under a modified atmosphere comprising nitrogen and carbon dioxide;

stabilizing the pasta product inside each package by exposure to microwaves, and then cooling the

2

packages of pasta product thus stabilized in an air stream.

The features and advantages of the invention can be more clearly appreciated from the following detailed description of an exemplary pasta product and method of making it.

In the drawing:

Figure 1 reproduces an electron photomicrograph of a newly extruded pasta product; and

Figure 2 reproduces an electron photomicrograph of a pasta product as obtained by this invention, with the same magnification as Figure 1.

A dough conventionally prepared by kneading metered amounts of semolina and water is extruded into fresh pasta having a predetermined size/shape (such as short length pasta of the varieties commonly called "farfalloni", smooth or scored "penne", "tortiglioni", "fusilli", etc.) and the same web thickness as conventional dried pasta (0.8 mm to 2.0 mm).

The newly made pasta has a moisture content of about 32% and a temperature of about 48°C. This pasta is then set, as by a fast (2-4 minutes) heating process in a medium having 30-70% relative humidity and a temperature in the 25° to 70°C range. Following the setting step, itself conventional in nature, the pasta exhibits a moisture content of about 30%; it is then dried by heating in a medium having a relative humidity of 50-80% and a temperature between 90°C and 110°C. This process step is protracted for approximately 15 minutes, at the end of which time the pasta has a moisture content of 25%, a temperature of about 93°-94°C, and an Aw value of 0.94. Immediately afterwards, said pasta is chilled to room temperature, while retaining the same moisture content (25%) and Aw (0.94) values as it had on exiting the drying step. Preferably, the chilling is applied for no more than 6 minutes to attain a temperature of 26°C for the product.

Metered amounts of the pasta thus processed are sealed in respective transparent packages to microwaves, under a modified atmosphere, preferably an atmosphere comprising a suitable mixture of nitrogen and carbon dioxide. The individual packages are then passed through a microwave tunnel to achieve required heat stabilization, whereafter they are delivered to storage, following a cooling step in an air stream.

Using the above-described method, a variety of short length pasta called scored "penne" was prepared.

Directly upon exiting the extruder, a specimen of such scored "penne" pasta -- having a moisture content of 32% and a thickness, measured outside the score peaks, of 1.6 mm -- is severed crosswise, and a magnified photograph of the cut taken under the electron microscope (Photo 1).

It can be readily appreciated from the photograph that a large number of starch granules (designated A) are present therein which stand significantly proud of the gluten matrix in which they are carried, and that some of them even look on the point of separating from the matrix.

On cooking (re-hydration in boiling water), the behavior of the pasta product (scored "penne") having the above structure does not show to meet normal consumer's expectations. In fact, it does not withstand the cooking process well, is made sticky by a coating which covers its surface, and lacks firmness. In addition, the cooking water turns cloudy. A cause for such behavior is thought to be the comparative ease with which the starch nuclei are allowed to escape the gluten mesh that is supposed to hold them in.

A scored "penne" pasta specimen having the same size/shape as the former, has been picked up from a package coming out of the chilling tunnel. Accordingly, this had gone through all the steps of the inventive method, including stabilization through a microwave tunnel.

This scored "penne" pasta specimen (moisture content = 25%; thickness = 1.6 mm, as measured outside the score peaks) was severed crosswise, and a photomicrograph of the cut taken under the electron microscope (Photo 2).

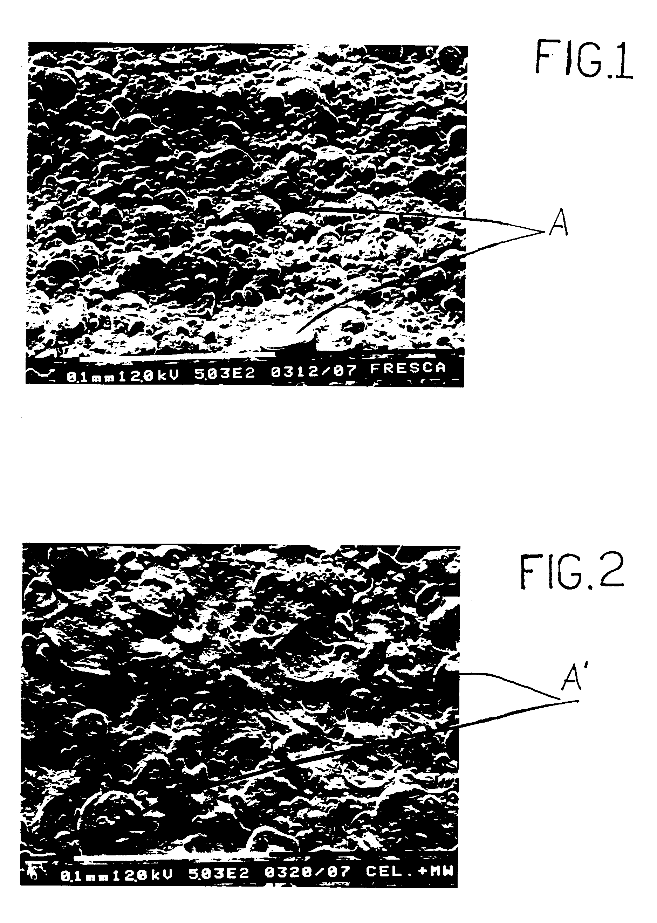

An examination of the photograph clearly reveals that the starch granules (designated A') are fully embedded, and flattened, in the gluten matrix whose surface shows to be formed of a non-porous, continuous gelled film. The cut surface looks smooth compared to that of the cut shown in the photomicrograph of Figure 1.

On cooking, the behavior of pasta with the latter structure proved quite satisfactory. Its cooking properties are good, it uniquely springy on the dish, and develops no surface coating. On completion of the cooking process, the water is still clear. This excellent behavior is thought to be mainly ascribable to the surprising tenacity with which the gluten mesh holds the starch granules embedded and flattened in it.

Pasta of the scored "penne" variety prepared in accordance with this invention (moisture content = 25%; thickness = 1.6 mm, as measured outside the score peaks) can be cooked to "just underdone" in 6 minutes, that is one half the time required for similar dried scored "penne" pasta (moisture content = 11.5%; thickness = 1.6 mm, as measured outside the score peaks) prepared by conventional methods.

The Table that follows also includes other feature values of the inventive pasta products compared to those of corresponding dried pasta.

In the Table, the COOKING VALUE entries reflect numerically the evaluation of three physical parameters of the pasta after cooking and draining, namely its:

consistency or firmness;

stickness; and

springlness on the dish.

Each parameter has been measured, evaluated, and expressed as centesimal points or numbers. For example, a good pasta would be assigned 70-80 points of COOKING VALUE, while an excellent pasta may reach 80-90 points.

The compressive strength and toughness values shown in the Table have been measured on an INSTRON Model 4031 compressive stress gage.

**T A B L E**

| SIZE/SHAPE | DRIED PASTA (moisture content 11.5%) | | | | INVENTIVE PASTA (moisture content 25%) | | | |
|---|---|---|---|---|---|---|---|---|
| | COOKING VALUE (pts.) | COMP. STRENGTH (N) | TOUGHNESS (Pa) | COOKING TIME (min.) | COOKING VALUE (pts.) | COMP. STRENGTH (N) | TOUGHNESS (Pa) | COOKING TIME (min.) |
| FARFALLONI (1.2 mm web) | 88 | | | 11 | 92 | | | 5 |
| SMOOTH PENNE (1.3 mm web) | 89 | | | 11 | 92 | | | 5 |
| SCORED PENNE (1.6 mm web) .end product | 76 | 518 | 50,4 | 12 | 80 | 677 | 49,3 | 6 |
| .fresh pasta | | | | | 64 | 370 | 29,9 | |
| TORTIGLIONI (1.6 mm web) | 89 | 89 | | 12 | 90 | | | 6 |
| FUSILLI (1.5 mm web) | 82 | 82 | | 13 | 86 | | | 7 |

## Claims

1. A fast-cooking pasta product, characterized in that it has:
   a moisture content in the 24% to 28% range;

a web thickness in the 0.8 mm to 2.0 mm range;

a cooking time of 3 to 7 minutes in boiling water:

and wherein the starch granules appear to be embedded and flattened within a gluten matrix on whose surface they form a continuous gelled film.

2. A pasta product according to Claim 1, characterized in that it has an Aw value in the 0.92 to 0.98 range.

3. A pasta product according to Claim 1, characterized in that it has a moisture content of 25% and an Aw value of 0.94.

4. A method of making a fast-cooking pasta product as claimed in the preceding claims, characterized in that it comprises the steps of:

providing a pasta product, as newly made from semolina and water and set into a predetermined size/shape, at a moisture content of 30-32%;

dehydrating said pasta product by heat treatment until a pasta product is obtained which has a moisture content of 24-28% and a temperature of 90-95°C, with an Aw in the 0.92 to 0.98 range;

chilling the pasta product thus obtained down to a temperature thereof in the 24° to 27°C range while keeping the average moisture and the Aw values unaltered;

sealing metered amounts of the pasta product thus obtained inside transparent packages to microwaves and under a modified atmosphere comprising nitrogen and carbon dioxide;

stabilizing the pasta product inside each package by exposure to microwaves, and then cooling the packages of pasta product thus stabilized in an air stream.

5. A method according to Claim 4, characterized in that the pasta dehydration step by heat treatment is carried out in a medium having 50-80% relative humidity and a temperature in the 90°C to 110°C range.

6. A method according to Claim 5, characterized in that said heat treatment is maintained over a time period of about 15 minutes.

7. A method according to Claim 6, characterized in that the chilling step is carried out over a time period of up to 6 minutes until a temperature of 24°C to 26°C is attained for the product.

**Patentansprüche**

1. Eine kurze Kochzeit aufweisendes Teigwarenprodukt, gekennzeichnet durch einen Feuchtigkeitsgehalt im Bereich von 24% bis 28%, eine Bahndicke im Bereich von 0,8 mm bis 2,0 mm und eine Kochzeit von 3 bis 7 min in kochendem Wasser, wobei die Stärkekörnchen in einer Glutenmatrix eingebettet und abgeflacht zu sein scheinen und auf der Oberfläche der Glutenmatrix einen fortlaufenden gelierten Film bilden.

2. Teigwarenprodukt nach Anspruch 1, dadurch gekennzeichnet, daß es einen Aw-Wert im Bereich von 0,92 bis 0,98 aufweist.

3. Teigwarenprodukt nach Anspruch 1, dadurch gekennzeichnet, daß es einen Feuchtigkeitsgehalt von 25% und einen Aw-Wert von 0,94 aufweist.

4. Verfahren zur Herstellung eines eine kurze Kochzeit aufweisenden Teigwarenprodukts nach einem der vorhergehenden Ansprüche, dadurch gekennzeichnet, daß es folgende Stufen umfaßt:

Bereitstellen eines frisch aus Gries und Wasser zubereiteten Teigwarenprodukts und Überführen desselben in eine bestimmte Größe/Form bei einem Feuchtigkeitsgehalt von 30 bis 32%;

Entwässern des Teigwarenprodukts durch Erwärmen bis zum Erhalt eines Teigwarenprodukts eines Feuchtigkeitsgehalts von 24 bis 28% und einer Temperatur von 90 bis 95°C mit einem Aw-Wert im Bereich von 0,92 bis 0,98;

Abschrecken des erhaltenen Teigwarenprodukts auf eine Temperatur im Bereich von 24° bis 27°C unter unverändertem Aufrechterhalten des durchschnittlichen Feuchtigkeitsgehalts und der Aw-Werte;

Einsiegeln abgemessener Mengen des erhaltenen Teigwarenprodukts im Inneren durchsichtiger Packungen mit Hilfe von Mikrowellen unter einer Stickstoff und Kohlendioxid umfassenden modifizierten Atmosphäre;

Stabilisieren des Teigwarenprodukts in den einzelnen Packungen durch Einwirkenlassen von Mikrowellen und

anschließendes Kühlen der Packungen des derart stabilisierten Teigwarenprodukts in einem Luftstrom.

5. Verfahren nach Anspruch 4, dadurch gekennzeichnet, daß die Teigwarenentwässerung durch Wärmebehandeln in einem Medium einer relativen Luftfeuchtigkeit von 50 bis 80% bei einer Temperatur im Bereich von 90°C bis 110°C durchgeführt wird.

6. Verfahren nach Anspruch 5, dadurch gekennzeichnet, daß die Wärmebehandlung über einen Zeitraum von etwa 15 min erfolgt.

7. Verfahren nach Anspruch 6, dadurch gekennzeichnet, daß das Abschrecken über einen Zeitraum von bis zu 6 min bis zum Erreichen einer Produkttemperatur von 24°C bis 26°C durchgeführt wird.

**Revendications**

1. Pâtes à cuisson rapide, caractérisées en ce quelles ont :
   - une teneur en humidité dans la gamme de 24 % à 28 %;
   - une épaisseur de corps dans la gamme de 0,8 mm à 2,0 mm;
   - un temps de cuisson de 3 à 7 minutes dans l'eau bouillante;
   
   et dans lesquelles les grains d'amidon apparaissent être noyés et aplatis à l'intérieur d'une matrice de gluten à la surface de laquelle ils forment un film gélifié continu.

2. Pâtes selon la revendication 1, caractérisées en ce qu'elles ont une valeur Aw dans la gamme de 0,92 à 0,98.

3. Pâtes selon la revendication 1, caractérisées en ce qu'elles ont une teneur en humidité de 25 % et une valeur Aw de 0,94.

4. Procédé de préparation de pâtes à cuisson rapide selon les revendications précédentes, caractérisé en ce qu'il comprend les étapes de :

   fournir des pâtes, venant d'être préparées à partir de semoule et d'eau et réalisées en une forme/taille prédéterminées, avec une teneur en humidité de 30-32 %;

   déshydrater lesdites pâtes par un traitement à la chaleur jusqu'à ce que les pâtes soient obtenues avec une teneur en humidité de 24-28 % et une température de 90-95°C, avec une valeur Aw dans la gamme de 0,92 à 0,98;

   refroidir les pâtes ainsi obtenues jusqu'à une température dans la gamme de 24°C à 27°C tout en n'altérant pas les valeurs d'humidité moyenne et de Aw;

   fermer de façon étanche des quantités mesurées des pâtes ainsi obtenues à l'intérieur de sacs transparents aux micro-ondes et sous atmosphère modifiée comprenant de l'azote et du dioxyde de carbone;

   stabiliser les pâtes à l'intérieur de chaque sac par exposition aux micro-ondes, et refroidir ensuite les sacs de pâtes ainsi stabilisés sous courant d'air.

5. Procédé selon la revendication 4, caractérisé en ce que l'étape de déshydratation des pâtes par traitement à la chaleur est réalisée dans un milieu à 50-80 % en humidité relative et à une température dans la gamme de 90°C à 110°C.

6. Procédé selon la revendication 5, caractérisé en ce que ledit traitement à la chaleur est maintenu pendant une période de temps d'environ 15 minutes.

7. Procédé selon la revendication 6, caractérisé en ce que l'étape de refroidissement est réalisée pendant une période de temps allant jusqu'à 6 minutes et jusqu'à ce qu'une température de 24°C à 26°C soit obtenue pour le produit.

FIG.1

0.1mm 120kV 5.03E2 0312/07 FRESCA

FIG.2

0.1mm 120kV 5.03E2 0320/07 CEL.+MW